# EUROPEAN PATENT SPECIFICATION

(11) **EP 1 469 720 B1**
(45) Date of publication and mention of the grant of the patent: **28.02.2007**
(21) Application number: 03705485.5
(22) Date of filing: 29.01.2003
(51) Int. Cl.: A01K 61/00, E02B 5/08

(54) **METHOD FOR PREVENTING FOULING BY SHELLFISH**
VERFAHREN ZUR VERHINDERUNG VON VERSCHMUTZUNG VON SCHALENTIEREN
PROCEDE DESTINE A EMPECHER L'ENCRASSAGE PAR DES CRUSTACES ET COQUILLAGES

(30) Priority: 30.01.2002 NL 1019861
(43) Date of publication of application: 27.10.2004
(73) Proprietor: Nederlandse Organisatie voor Toegepast-Natuurwetenschappelijk Onderzoek TNO, 2628 VK Delft (NL)
(72) Inventor: OORSCHOT, Ronald, Willem, Arie, NL-4462 BG Goes (NL); ROOS, Cornelis, NL-7323 EN Apeldoorn (NL)
(74) Representative: Winckels, Johannes Hubertus F.
(86) International application number: PCT/NL2003/000063
(87) International publication number: WO 2003/063584

(56) References cited:
- EP-A- 0 573 298
- EP-A- 0 908 214
- US-A- 3 996 895

## Description

The invention relates to a method for preventing fouling by shellfish in technical apparatus fed with seawater or fresh surface water, such as cooling apparatus of power stations or in the chemical industry.

In surface water (seawater or fresh water), depending on the season, sometimes large quantities of larvae of shellfish (clams, oysters, barnacles, etc.) occur. If this water is taken in, for instance for cooling technical apparatus, the larvae can deposit on the surfaces of the apparatus, where they develop into shellfish. The resultant accumulation of shellfish in the apparatus leads to, inter alia, disturbance of the flow profile of the water and/or reduction of heat transmission in cooling apparatus. Moreover, the bonding of the shellfish to the surface of the apparatus is very strong so that the shellfish are difficult to remove.

Conventional methods for removing such undesired deposits of shellfish, or preventing these deposits, comprise, for instance, the use of pesticides. However, such agents are costly and generally entail a burden to the environment. Also, periodically, the temperature of the water in the apparatus may be increased, to attempt to detach the deposited shellfish. However, increasing the temperature entails costs and, furthermore, is not possible in all apparatus. Another possibility is for deposits having formed to be removed mechanically, for instance with the aid of brushes. However, to this end, generally, the cooling water flow needs to be interrupted. Furthermore, mostly, not all parts of the apparatus are readily accessible to such mechanical means.

The present invention contemplates providing a method that does not have these drawbacks. It has been found that by leading the surface water to be taken in, destined for industrial plants, along a suitable substrate onto which substrate shellfish grow, this object can be met. Therefore the present invention relates to a method for obtaining an industrial cooling water flow, comprising the steps of:
(i) providing precursors of shellfish on a substrate,
(ii) bringing a flow of water into contact with the precursors of shellfish mentioned;
(iii) allowing the precursors develop into harvestable shellfish; and
(iv) harvesting at least a portion of the harvestable shellfish mentioned, while the flow of water is purified and is obtained as a flow of purified cooling water,
wherein the growth conditions of said shellfish are improved by adding nutrients to said flow of water and/or by increasing the temperature of said flow of water.

What is achieved by having the precursors develop into harvestable shellfish is that during growth on the substrate, the shellfish take up nutrients from the surface water. As a result, the surface water is purified and, if this water is used as cooling water, no, or at least a reduced quantity of shellfish can feed on this water in that the water has become specifically depleted of nutrients essential to these organisms in particular. As a result, the extent of deposition and growth of shellfish in the apparatus is reduced. Moreover, what is achieved according to the present invention is that the nutrients removed from the water can be recovered in the form of harvestable shellfish. Subsequently, the thus recovered shellfish can be used elsewhere, for instance by offering them for consumption purposes. If the harvested shellfish must be suitable for consumption, preferably, precursors of mussels are presented to the substrate, preferably those of the blue mussel (*Mytilus edulis*), if the surface water is saline. For freshwater purposes, the triangular mussel (*Dreissena polymorpha*) is suitable, which, after harvesting, can for instance be offered as animal feed. Also, the shell of these shellfish can be used as a source of calcium, for instance as a raw material for the chemical industry.

From Russian patent specification 2 108 978, for that matter, a system is known for the prevention of biological fouling in apparatus. This known system is based on a special filter on which microorganisms can deposit. The direct provision of precursors of macroorganisms such as shellfish on a substrate and then harvesting them is not mentioned or suggested in this Russian patent specification.

Document US-A-3 996 895 teaches a method for filtering out organic components of the intake water of industrial cooling systems by using filtering populations of shellfish.

Shellfish are particularly attractive because of the possibility of using a very open packing, while the auto-suction of water flowing by effects a considerable increase of the filtering effect at a low pressure drop across the water treating system.

In the present application, shellfish are understood to include mussels and oysters, but also other mollusks with calcareous shells, such as barnacles.

It is of importance to the present invention that macroorganisms present on the substrate remove biomass particles from the water flow. This is achieved through starting with precursors of harvestable shellfish which then bond to and develop on the substrate. The term "precursor" is understood to mean organisms in an earlier stage of life than the eventual shellfish to be harvested. Preferably, as precursors, shellfish seed or shellfish larvae are used, particularly preferred are mussel seed or mussel larvae, which subsequently develop on the substrate into fully grown shellfish before they are harvested.

According to the present invention, applying precursors of shellfish onto a substrate (step i) and bringing a flow of water into contact with these precursors of shellfish (step ii) can also be carried out simultaneously by presenting surface water to the substrate in which these precursors are already present. If the surface water comes into contact with the substrate, the precursor will bond to it and hence grow into harvestable shellfish.

It is also possible to provide externally obtained precursors, for instance in the form of mussel seed, on the substrate by bringing it into contact therewith, in an otherwise conventional manner, for instance by scattering it in the basin in which the substrate is present.

Naturally, combinations of the above-mentioned sources of precursors are also possible.

Suitable substrates for the method according to the present invention are any conventional substrates used in the shellfish growing industry. Particularly suitable are substrates based on gauze, grids, nets, suspended cords and/or fibers.

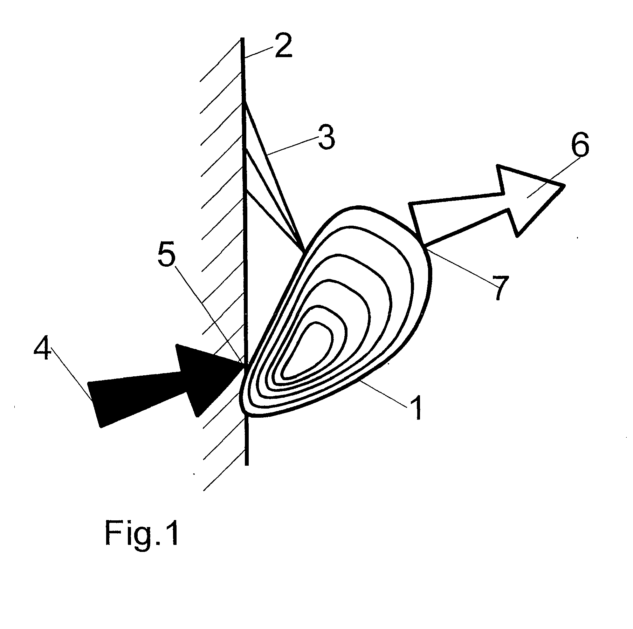

Fig. 1 illustrates the method according to the invention and shows a shellfish (1) having bonded to a substrate by means of byssus threads (3). The water flow to be purified, represented by arrow (4), is sucked-in by the shellfish via the mouth, which is approximately located at (5). A purified flow of water, represented by arrow (6) is secreted by the shellfish via the anus (approximately located at (7)).

With particular advantage, the method according to the invention is carried out such, that the growth conditions of the shellfish are improved by the addition of nutrients to the flow of water, and/or by increasing the temperature of the flow of water.

What is achieved by improving the growth conditions, is that the shellfish will grow more rapidly and that a more efficient purification of the water is obtained. This is surprising because, at first sight, adding nutrients seems to directly oppose the contemplated object, which is the reduction of fouling, which is the result of, indeed, too many nutrients in the water. However, the faster growth of the shellfish on the substrate appears to fully compensate this alleged disadvantage.

The growth conditions of the shellfish can, for instance, be improved by adding nutrients to the water, such as nitrogen (for instance in the form of fertilizer), phosphorus (for instance in the form of phosphates) and oxygen (for instance by feeding air through). These substances can, for instance, be continuously supplied to the basin in which the substrate is present.

It is also possible to increase the temperature of the water at the substrate. This is particularly advantageous if certain shellfish, such as mussels are used, because the reproduction of these shellfish can be influenced in this manner. What can be achieved by increasing the temperature of the water, is that the start of the reproduction can be advanced considerably (by one or more months).

Particular advantage is obtained if, for the increase of the temperature of the water which is in contact with the substrate, a warmer effluent (or a part thereof) from an industrial apparatus is used, which effluent is, for instance, obtained by heating the purified cooling water flow, obtained according to the invention. This warm effluent can then be admixed with the flow of surface water to be purified, so as to obtain a flow of water to be treated which is at the desired temperature.

In some cases, in particular if seawater is used, sand, present in the water, may constitute a problem, for instance when this comes into contact with the substrate, but also in the apparatus where the purified water is used as cooling water. Although it is theoretically possible to remove this sand with, for instance, filters, this is generally not practically executable, in view of the magnitude of most cooling water flows. Therefore, with particular advantage, the water flow to be treated is first led through a basin (for instance in the form of a port) where the flow velocity is low to such a degree that the sand can settle. The settled sand can then be removed by (continuous or discontinuous) dredging. If desired, the sand can be obtained as a separate product flow.

Suitable substrates are, as already mentioned, built up from elements comprising grids, nets and/or fibers. These elements can be provided in a basin in a conventional manner, such that a proper contact with the water flow to be treated is obtained. Moreover, the elements have to be easily removable from the basin, so that the encrusted shellfish can be removed therefrom, whereupon the elements can be replaced again. Suitable materials for the substrate elements are plastics, such as polyethylene (PE) or polyvinyl chloride (PVC) or hard material, such as stony material, shells or (stainless) metal. The elements can be designed as wire-shaped, flat or net-shaped structures, perforated plates and the like.

Various configurations are possible, while the optimal configuration per case can be easily determined by the skilled person.

If the water to be taken in contains, for instance, many larvae and relatively few nutrients, with particular advantage, a substrate is selected which offers a relatively large surface for the larvae to grow on, for instance fluffy wires, such as nylon wires (mutual distance typically some centimeters, for instance approximately 2 cm, length typically some meters, for instance 3 - 4 m). Due to the large substrate surface, the larvae are effectively captured. The larvae can develop into mussels and are preferably harvested before they are fully grown.

Conversely, it is possible that the water to be taken in contains few larvae and relatively many nutrients. In that case, with particular advantage, a substrate is used comprising plates, for instance in the form of crates, which are easily stackable. Such substrates are particularly suitable for accommodating large mussels. On this substrate, adult mussels can be provided which are supplied from elsewhere. By having these mussels grow out, the content of nutrients in the water is efficiently reduced.

Naturally, combinations of these two embodiments are also possible.

Advantageously, the elements, together forming the substrate, are placed at a mutual distance of several centimeters or more, preferably at a mutual distance of 5 - 50 centimeters, most preferably of 10 - 35 centimeters. What is achieved by this space between the elements is that, on the one hand, sufficient shellfish can grow on without the through-flow of water being hindered and that, on the other hand, a relatively low pressure drop is obtained.

A minimal pressure drop is particularly important, as the flows of water to be treated can be very large, running up to as much as 500,000 m³/h or more. Naturally, the invention can also be used with smaller water flows, for instance of 2000 m³/h or less.

According to the invention, measures can be taken for reducing or increasing the flow velocity in the space in which the substrate is located (the basin), while the flow rate of the through-flowing water preferably remains more or less constant. Reduction of the flow velocity at a constant flow rate can, for instance, be very suitably obtained by widening the basin (for instance a channel or pipe) in the flow direction. Due to the lower flow velocity, a higher residence time of the water in the basin is realized, so that the shellfish can grow even better. Moreover, the lower flow velocity results in a lesser pressure drop across the basin. Increasing the flow velocity can for instance be realized by narrowing the basin. Increasing or reducing the flow velocity can be desired if the specific conditions (among which the amount of nutrients in the water, type of shellfish, desired purity of the purified flow of cooling water, etc.) require this.

According to the invention, continuously, a flow of purified cooling water can be obtained, starting from fresh or saline surface water. Moreover, with the invention, a considerable yield of shellfish can be obtained. At a flow of cooling water of, for instance, 100,000 m³/h of seawater, if, as precursors of shellfish according to the invention, a blue mussel is used, approximately 500 - 1500 tons of mussels can be harvested annually. Naturally, this yield can vary strongly, also depending on the food supply present.

## Claims

1. A method for obtaining an industrial cooling water flow, comprising the steps of:
(i) providing precursors of shellfish onto a substrate,
(ii) bringing a flow of water into contact with said precursors of shellfish,
(iii) allowing said precursors to develop into harvestable shellfish, and
(iv) harvesting at least a portion of said harvestable shellfish, while said flow of water is purified and is obtained as a purified flow of cooling water, wherein the growth conditions of said shellfish are improved by adding nutrients to said flow of water and/or by increasing the temperature of said flow of water.

2. A method according to claim 1, wherein said precursors of shellfish comprise shellfish seed, preferably mussel seed, and/or shellfish larvae, preferably mussel larvae.

3. A method according to any one of the preceding claims, wherein steps (i) and (ii) are performed simultaneously by bringing the flow of water having said precursors therein into contact with said substrate.

4. A method according to claim 1 or 2, wherein said precursors have been externally obtained.

5. A method according to any one of the preceding claims, wherein said substrate comprises gauze, grids, nets, suspended cords and/or fibers.

6. A method according to any one of the preceding claims, wherein the nutrients are chosen from the group consisting of nitrogen, phosphorus, and oxygen.

7. A method according to any one of the preceding claims, wherein said temperature is increased by admixing at least a part of an effluent from an industrial apparatus, which effluent has been obtained by heating said purified flow of cooling water, with said flow of water.

8. A method according to any one of the preceding claims, wherein, first, said flow of water is led through a basin, so as to cause the sand present in the flow of water to settle.

## Patentansprüche

1. Verfahren zur Gewinnung eines industriellen Kühlwasserstroms, bei dem man
(i) Vorläufer eines Schalentiers auf einem Substrat bereitstellt,
(ii) einen Wasserstrom mit den Vorläufern des Schalentiers in Kontakt bringt,
(iii) es den Vorläufern erlaubt, sich in erntefähiges Schalentier zu entwickeln, und
(iv) mindestens einen Teil des erntefähigen Schalentiers erntet,
wobei der Wasserstrom gereinigt und als gereinigter Kühlwasserstrom gewonnen wird, und wobei die wachstumsbedingungen des Schalentiers durch zugabe von Nährstoffen und/oder durch Erhöhung der Temperatur des Wasserstroms verbessert werden.

2. Verfahren nach Anspruch 1, bei dem die Vorläufer des Schalentiers Schalentier-Samen, vorzugsweise Muschel-Samen und/oder Schalentier-Larven, vorzugsweise Muschel-Larven umfassen.

3. Verfahren nach einem der vorhergehenden Ansprüche, bei dem die Schritte (i) und (ii) gleichzeitig ausgeführt werden, indem man den Wasserstrom, der die Vorläufer enthält, mit dem Substrat in Kontakt bringt.

4. Verfahren nach Anspruch 1 oder 2, bei dem die Vorläufer extern erhalten wurden.

5. Verfahren nach einem der vorhergehenden Ansprüche, bei dem das Substrat Gaze, Gitter, Netze, suspendierte Schnüre und/oder Fasern umfasst.

6. Verfahren nach einem der vorhergehenden Ansprüche, bei dem die Nährstoffe ausgewählt sind aus der Gruppe bestehend aus Stickstoff, Phosphor und Sauerstoff.

7. Verfahren nach einem der vorhergehenden Ansprüche, bei dem die Temperatur erhöht wird, indem man mindestens einen Teil eines Abwassers von einem industriellen Gerät mit dem Wasserstrom vermischt, wobei das Abwasser durch Erhitzen des gereinigten Kühlwasserstroms erhalten wurde.

8. Verfahren gemäß einem der vorhergehenden Ansprüche, bei dem der Wasserstrom zunächst durch ein Becken geleitet wird, so dass sich der in dem Wasserstrom vorhandene Sand absetzt.

## Revendications

1. Procédé pour obtenir un écoulement d'eau de refroidissement industriel, comportant les étapes consistant à :
(i) fournir des précurseurs de coquillages et crustacés sur un substrat,
(ii) amener un écoulement d'eau en contact avec lesdits précurseurs de coquillages et crustacés,
(iii) permettre auxdits précurseurs de devenir des coquillages et crustacés pouvant être recueillis, et
(iv) recueillir au moins une partie desdits coquillages et crustacés pouvant être recueillis, tandis que ledit écoulement d'eau est purifié et est obtenu en tant qu'écoulement purifié d'eau de refroidissement, dans lequel les conditions de croissance desdits coquillages et crustacés sont améliorées en ajoutant des nutriments audit écoulement d'eau et/ou en augmentant la température dudit écoulement d'eau.

2. Procédé selon la revendication 1, dans lequel lesdits précurseurs de coquillages et crustacés comportent des semences de coquillages et crustacés, de préférence des semences de moules, et/ou des larves de coquillages et crustacés, de préférence des larves de moules.

3. Procédé selon l'une quelconque des revendications précédentes, dans lequel les étapes (i) et (ii) sont mises en oeuvre simultanément en amenant l'écoulement d'eau contenant lesdits précurseurs en contact avec ledit substrat.

4. Procédé selon la revendication 1 ou 2, dans lequel lesdits précurseurs ont été obtenus extérieurement.

5. Procédé selon l'une quelconque des revendications précédentes, dans lequel ledit substrat comporte un tamis, des grilles, des filets, des cordes suspendues et/ou des fibres.

6. Procédé selon l'une quelconque des revendications précédentes, dans lequel les nutriments sont choisis dans le groupe constitué d'azote, de phosphore, et d'oxygène.

7. Procédé selon l'une quelconque des revendications précédentes, dans lequel ladite température est augmentée en ajoutant au moins une partie d'un effluent provenant d'un appareil industriel, lequel l'effluent a été obtenu en chauffant ledit écoulement purifié d'eau de refroidissement, avec ledit écoulement d'eau.

8. Procédé selon l'une quelconque des revendications précédentes, dans lequel, premièrement, ledit écoulement d'eau est mené à travers un bassin, afin d'amener le sable présent dans l'écoulement d'eau à sédimenter.
